# EUROPÄISCHE PATENTSCHRIFT

(11) **EP 1 137 604 B1**
(45) Veröffentlichungstag und Bekanntmachung des Hinweises auf die Patenterteilung: **04.02.2004**
(21) Anmeldenummer: 00944035.5
(22) Anmeldetag: 13.07.2000
(51) Int. Cl.: C03B 9/353

(54) **VORRICHTUNG ZUM ANTRIEB ZWEIER FORMHÄLFTENHALTER EINER GLASFORMMASCHINE**
DEVICE FOR DRIVING TWO MOLD HALVES OF A GLASS FORMING MACHINE
DISPOSITIF D'ENTRAINEMENT DE DEUX ELEMENTS DE MAINTIEN DE DEMI-MOULES D'UNE MACHINE A MOULER LE VERRE

(30) Priorität: 15.09.1999 DE 29916216 U
(43) Veröffentlichungstag der Anmeldung: 04.10.2001
(73) Patentinhaber: Heye International GmbH, 31683 Obernkirchen (DE)
(72) Erfinder: BÖGERT, Hermann, D-31749 Auetal (DE); HARTMANN, Thomas, D-31675 Bückeburg (DE); HERMENING, Heinz, D-32457 Porta Westfalica (DE)
(74) Vertreter: Callies, Rainer
(86) Internationale Anmeldenummer: PCT/EP2000/006701
(87) Internationale Veröffentlichungsnummer: WO 2001/019739

(56) Entgegenhaltungen:
- EP-A- 0 195 599
- US-A- 5 019 147

## Beschreibung

Die Erfindung betrifft eine Vorrichtung nach dem Oberbegriff des Anspruchs 1.

Bei bekannten Vorrichtungen dieser Art (US 3 066 505 A, US 3 021 644 A, US 2 748 536 A und US 1 974 841 A) sind die Zapfen jeweils an einen in einer Längsebene der Glasformmaschine linear verschiebbaren Schlitten befestigt. In den beiden ersteren US-Patentschriften steht eine Zahnstange des Schlittens im Eingriff mit einem Ritzel, das über eine Welle mit einem weiteren Ritzel verbunden ist. Das weitere Ritzel steht im Eingriff mit einer weiteren Zahnstange, die durch den gemeinsamen Antrieb hin und her antreibbar ist. Bei der US 2 748 536 A wird der Schlitten durch eine Kolben-Zylinder-Einheit und bei der US 1 974 841 A durch eine in einer Kurvenbahn abrollende Treibrolle angetrieben. All diese Vorrichtungen sind aufwändig, störanfällig und wegen unerwünschter Toleranzen in ihren Bewegungen nicht ausreichend präzise.

Bei einer an sich bekannten Vorrichtung (US 1 911 119 A, Fig. 3, 8 und 19) sind die beiden Halter um eine gemeinsame senkrechte Säule der Maschine schwenkbar. An einem Anlenkpunkt jedes Halters ist in der Nähe einer Formwerkzeughälfte eine Lasche angelenkt. Das andere Ende der Lasche ist jeweils an einem Kurbelzapfen einer Kurbel angelenkt. Die Kurbel ist jeweils an einer an der Maschine gelagerten Welle befestigt. Die beiden Wellen werden über ein Hebelgetriebe durch eine gemeinsame, doppeltwirkende Kolben-Zylinder-Einheit hin und her drehend angetrieben.

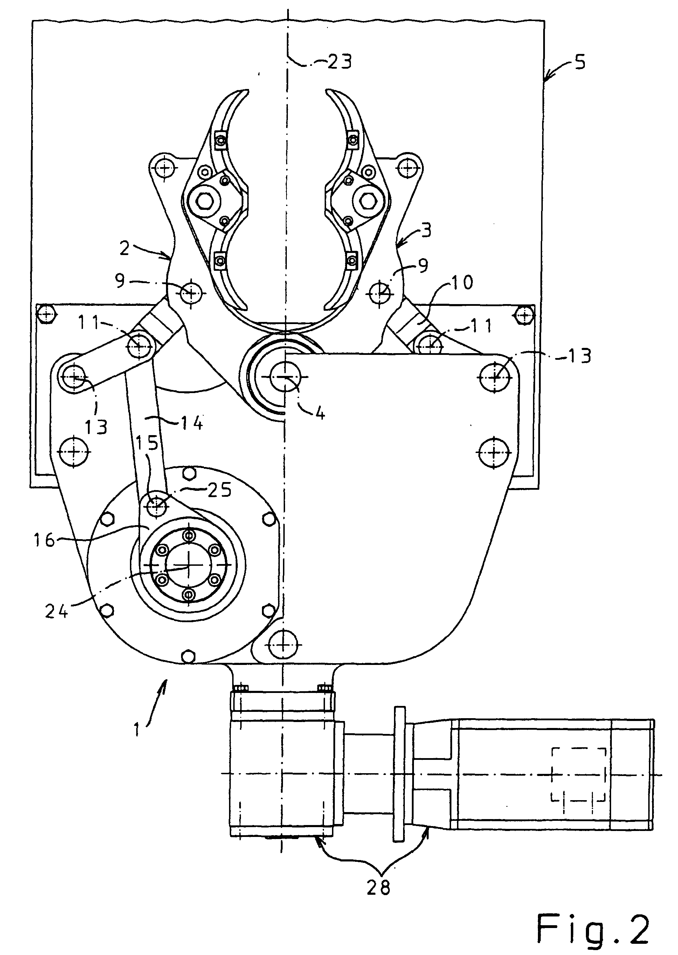

Eine ähnliche Vorrichtung ist aus der deutschen Patentschrift 1 704 112, Fig. 2 bis 5, an sich bekannt. Hier werden die beiden Wellen jedoch über ein Stirnrad-Untersetzungsgetriebe durch einen gemeinsamen pneumatischen Drehzylinder hin und her drehend angetrieben.

Der Erfindung liegt die Aufgabe zugrunde, den hin und her gehenden Antrieb der Halter zu verbessern und zu vereinfachen.

Diese Aufgabe ist durch die Merkmale des Anspruchs 1 gelöst.

Bei der Formung von Hohlglasgegenständen treten sowohl in den Vorformen der Vorformstation als auch in den Fertigformen der Fertigformstation innerhalb der Formwerkzeuge Kräfte auf, welche die geschlossenen Formwerkzeuge zu öffnen trachten. Jede derartige Öffnung ist unerwünscht, weil dann Teilfugen entstehen, in welche schmelzflüssiges Glas gepreßt werden kann. im Stand der Technik sind zahlreiche zusätzliche Vorrichtungen bekannt, mit denen die geschlossenen Formwerkzeuge während der Formungsvorgänge zwangsweise geschlossen gehalten werden sollen. Derartige zusätzliche Zuhaltevorrichtungen sind bei der Erfindung überflüssig. Bei der Erfindung wird die Zuhaltefunktion des Antriebs durch die Hebelgetriebe unterstützt, durch die das Gesamtgetriebe zwischen dem Antrieb und den Haltern in gewünschter Weise nichtlinear wird. Die Hebelgetriebe führen zu einer Verstärkung der Zuhaltekraft in der geschlossenen Stellung der Halter und damit der Formwerkzeuge. Die Bewegung der Halter kann in bekannter Weise entweder durch eine Schwenkung oder durch lineare Verschiebung geschehen. Durch die beiden Zahnräder und den Antrieb ergibt sich eine insgesamt einfache, kostengünstige und raumsparende Ausbildung der Vorrichtung, die außerdem zu sehr präzisen Schließ- und Öffnungsbewegungen der Halter führt.

Die Merkmale der Ansprüche 2 bis 14 stellen jeweils Ausgestaltungen der Vorrichtung dar, die zu Vorteilen beim Betrieb der Vorrichtung führen.

Die Merkmale der Ansprüche 15 bis 17 führen jeweils zu einer kompakten und stabilen Ausbildung der Vorrichtung.

Gemäß Anspruch 18 ergibt sich ein besonders einfaches und funktionssicheres Zahnradgetriebe. Die Stirnräder können in beliebiger, geeigneter Weise verzahnt, z.B. gerad- oder schrägverzahnt, sein.

Die Merkmale des Anspruchs 19 gestatten eine sehr genaue, programmierbare Steuerung der Schließ- und Öffnungsbewegungen der Halter. Zur Erzielung ausreichender Zuhaltekräfte kann das Drehmoment des Elektroservomotors während der Formvorgänge aufgeschaltet bleiben.

Gemäß Anspruch 20 kann das Getriebe nach den jeweiligen Bedürfnissen ausgelegt werden. Es kann sich z.B. um ein Untersetzungsgetriebe und/oder aus räumlichen Gründen um ein Winkelgetriebe handeln.

Diese und weitere Merkmale und Vorteile der Erfindung werden nachfolgend anhand der in den Zeichnungen dargestellten Ausführungsbeispiele näher erläutert. Es zeigt:
Fig. 1 eine Draufsicht auf eine erste Ausführungsform der Vorrichtung, teilweise im Schnitt,
Fig. 2 eine andere Draufsicht auf die Vorrichtung gemäß Fig. 1,
Fig. 3 Teile der Vorrichtung gemäß Fig. 1 und 2 in schematischer Darstellung,
Fig. 4 die Draufsicht auf eine weitere Ausführungsform der Vorrichtung, teilweise im Schnitt,
Fig. 5 Teile der Vorrichtung gemäß Fig. 4 in schematischer Darstellung,
Fig. 6 die Draufsicht auf eine weitere Ausführungsform der Vorrichtung und
Fig. 7 eine andere Ausführungsform für die Zahnräder und deren Antrieb in Seitenansicht.

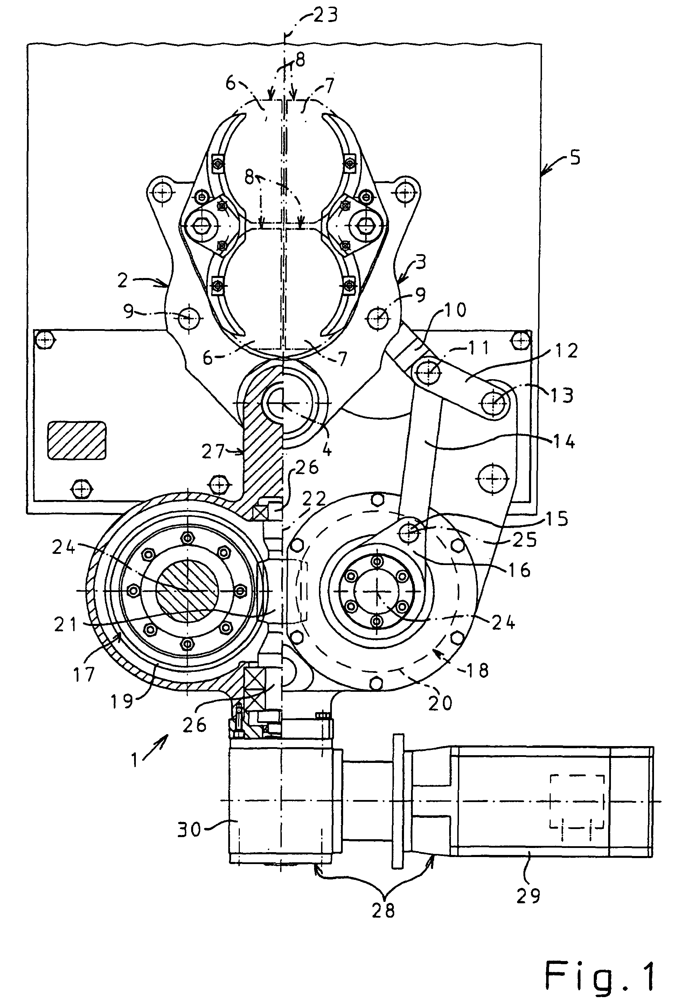

Fig. 1 zeigt eine Vorrichtung 1 zum hin und her gehenden Antrieb eines ersten Halters 2 und eines zweiten Halters 3, die um eine Schwenkachse 4 einer im einzelnen nicht dargestellten Glasformmaschine 5 schwenkbar gelagert sind. Der erste Halter 2 trägt zwei erste Formwerkzeughälften 6 und der zweite Halter 3 zwei zweite Formwerkzeughälften 7.

In der in Fig. 1 gezeigten voll geschlossenen Stellung der Halter 2, 3 bilden jeweils gegenüberliegende Formwerkzeughälften 6, 7 ein Formwerkzeug 8, z.B. eine Vorform oder eine Fertigform, zur Herstellung eines Hohtgtasgegenstands.

An einem ersten Anlenkpunkt 9 jedes Halters 2, 3 ist eine erste Lasche 10 angelenkt, von denen in Fig. 1 nur diejenige des zweiten Halters 3 gezeigt ist. In einem Abstand von dem ersten Anlenkpunkt 9 ist an jeder ersten Lasche 10 an einem zweiten Anlenkpunkt 11 eine zweite Lasche 12 angelenkt. Jede zweite Lasche 12 ist an einem im Abstand von dem ersten Anlenkpunkt 9 und dem zweiten Anlenkpunkt 11 angeordneten dritten Anlenkpunkt 13 der Glasformmaschine 5 angelenkt.

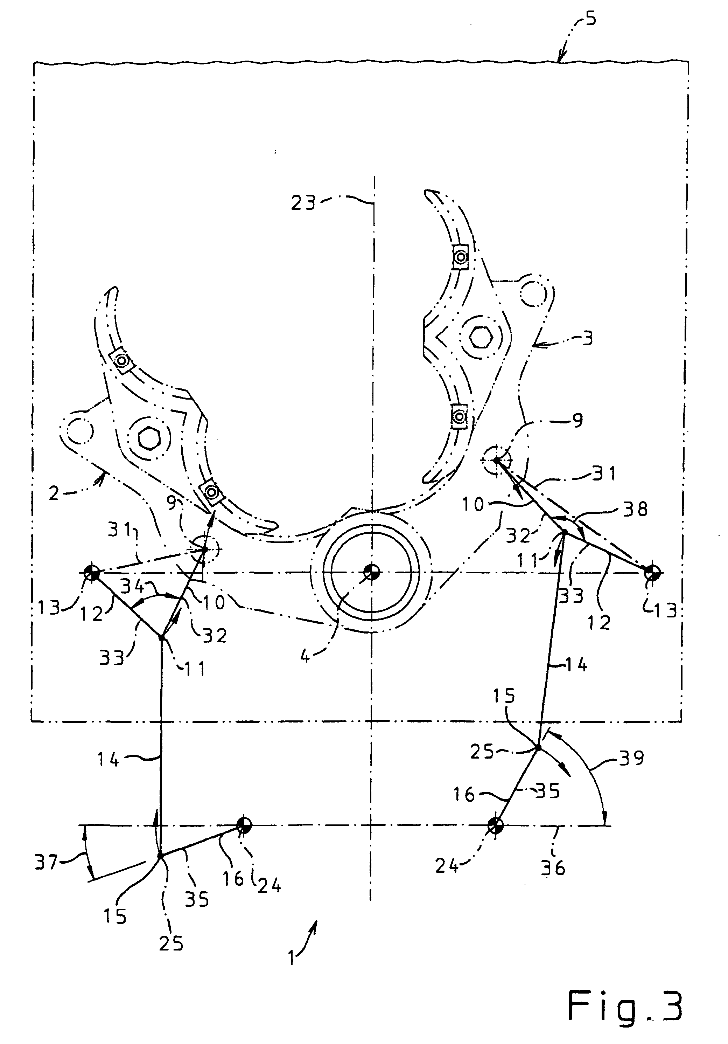

An jedem zweiten Anlenkpunkt 11 ist außerdem eine Stange 14 angelenkt, die ihrerseits im Abstand von dem zweiten Anlenkpunkt 11 an einem Kurbelzapfen 15 einer Kurbel 16 angelenkt ist. Jede der beiden Kurbeln 16 ist koaxial an einem ersten Zahnrad 17 oder einem zweiten Zahnrad 18 befestigt. Die Zahnräder 17, 18 sind in den Ausführungsbeispielen der Fig. 1 bis 6 als erstes Schneckenrad 19 und zweites Schneckenrad 20 ausgebildet. Die Schneckenräder 19, 20 stehen auf diametral gegenüberliegenden Seiten mit einer Schnecke 21 im Eingriff. Eine Längsachse 22 der Schnecke 21 ist in einer Längsebene 23 der Vorrichtung 1 angeordnet. Längsachsen 24 der Kurbeln 16 und Längsachsen 25 der Kurbelzapfen 15 verlaufen rechtwinklig zu und im Abstand von der Längsachse 22 der Schnecke 21. Eine Welle 26 der Schnecke 21 ist drehbar in einem Gehäuse 27 der Glasformmaschine 5 gelagert. Die Welle 26 wird durch einen Antrieb 28 hin und her drehend angetrieben. Der Antrieb 28 weist einen Elektroservomotor 29 und ein dem Elektroservomotor 29 nachgeschaltetes, in Antriebsverbindung mit der Welle 26 stehendes Getriebe 30, in diesem Fall ein Winkelgetriebe, auf. So werden also die Kurbeln 16 durch den gemeinsamen Antrieb 28 gegensinnig hin und her drehend angetrieben. Dabei schwenken die Halter 2, 3 um die Schwenkachse 4 zwischen der in Fig. 1 gezeigten, voll geschlossenen Stellung und einer auf der linken Seite der Fig. 3 eingezeichneten voll geöffneten Stellung synchron hin und her.

Fig. 2 zeigt weitere Einzelheiten des Getriebestranges für den ersten Halter 2.

Anhand der schematischen Fig. 3 wird der Funktionsablauf beim Betrieb der Vorrichtung 1 erläutert. Bei diesem Ausführungsbeispiel ist der erste Anlenkpunkt 9 jeweils in der Nähe der Formwerkzeughälften 6, 7 (Fig. 1 ) angeordnet. Der zweite Anlenkpunkt 11 ist in allen Betriebszuständen auf einer Seite einer Verbindungslinie 31 zwischen dem ersten Anlenkpunkt 9 und dem dritten Anlenkpunkt 13 angeordnet. Diese Seite ist jeweils der Kurbel 16 zugewandt.

In der auf der linken Seite der Fig. 3 dargestellten, voll geöffneten Stellung der Halter 2, 3 schließen Längsachsen 32 und 33 der ersten Lasche 10 und der zweiten Lasche 12 jeweils einen spitzen Winkel 34 miteinander ein. Der Winkel 34 beträgt z.B. 72°. In dieser voll geöffneten Stellung der Halter 2, 3 ist eine die Längsachse 25 des Kurbelzapfens 15 mit der Längsachse 24 der Kurbel 16 verbindende Verbindungsebene 35 jeweils auf einer ersten Seite einer durch die Längsachsen 24, 24 der beiden Kurbeln 16, 16 verlaufenden Querebene 36 der Vorrichtung 1 angeordnet. Diese erste Seite ist von den Haltern 2, 3 abgewandt. In dieser voll geöffneten Stellung der Halter 2, 3 schließen die Verbindungsebene 35 und die Querebene 36 einen spitzen Winkel 37 zwischen sich ein. Dieser Winkel 37 beträgt z.B. 20°.

In der auf der rechten Seite der Fig. 3 und außerdem in den Fig. 1 und 2 gezeichneten, voll geschlossenen Stellung der Halter 2, 3 ist die Verbindungsebene 35 jeweils auf einer zweiten Seite der Querebene 36 angeordnet. Diese zweite Seite ist den Haltern 2, 3 zugewandt. Dabei schließen die Verbindungsebene 35 und die Querebene 36 zwischen sich einen spitzen Winkel 39 von z.B. 60° ein. Gleichzeitig schließen die Längsachsen 32, 33 jeweils einen stumpfen Winkel 38 von z.B. 158° miteinander ein.

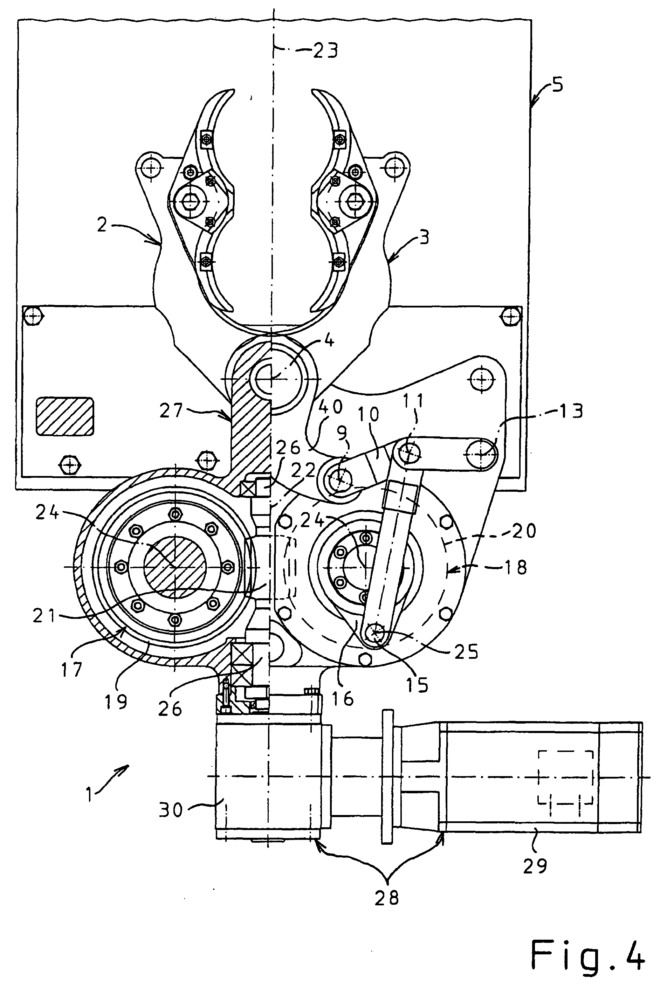

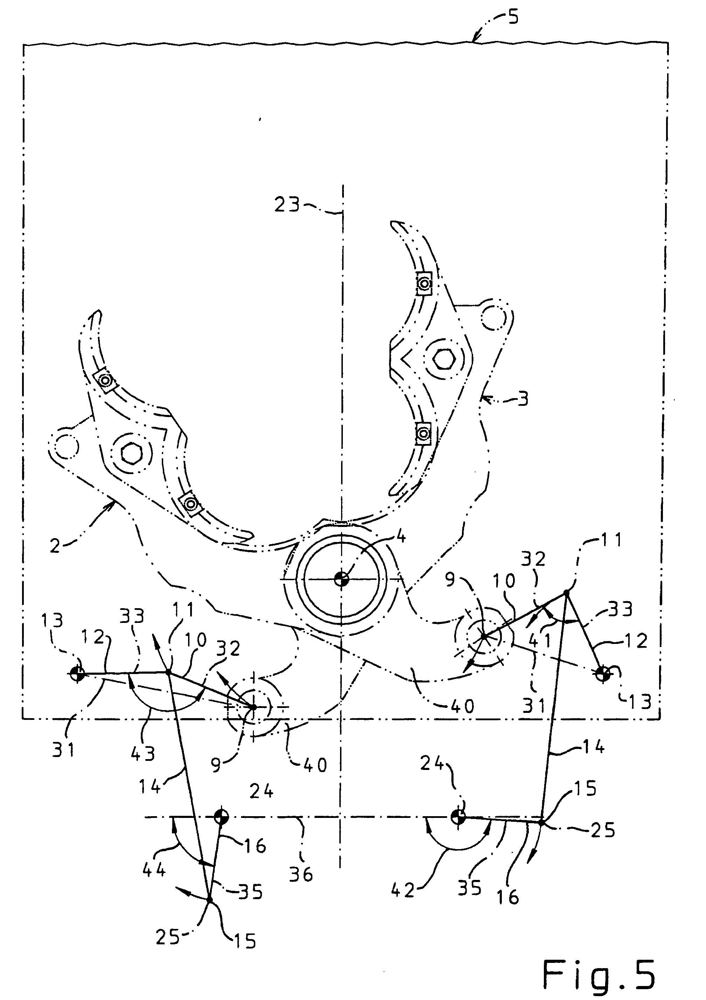

Die Ausführungsform der Vorrichtung 1 gemäß den Fig. 4 und 5 ähnelt derjenigen gemäß den Fig. 1 bis 3. Allerdings ist der erste Anlenkpunkt 9 jeweils an einem sich über die Schwenkachse 4 hinaus erstreckenden, rückwärtigen Fortsatz 40 der Halter 2, 3 angeordnet.

In der in Fig. 5 auf der linken Seite gezeichneten voll geöffneten Stellung der Halter 2, 3 schließen die Längsachsen 32, 33 der Laschen 10, 12 jeweils einen zumindest annähernd rechten Winkel 41 miteinander ein. In dieser voll geöffneten Stellung schließen außerdem die Verbindungsebene 35 und die Querebene 36 einen stumpfen Winkel 42 von z.B. 175° miteinander ein.

In der in Fig. 5 auf der rechten Seite gezeichneten voll geschlossenen Stellung der Halter 2, 3 schließen die Längsachsen 32, 33 der Laschen 10, 12 jeweils einen stumpfen Winkel 43 miteinander ein. In dieser voll geschlossenen Stellung der Halter 2, 3 schließen ferner die Verbindungsebene 35 und die Querebene 36 einen spitzen Winkel 44 von z.B. 82° miteinander ein.

Wie auch in Fig. 3, führt diese Geometrie des Hebelgetriebes 16, 14, 10, 12 auch in Fig. 5 zu einer Verstärkung der durch den Elektroservomotor 29 aufgebrachten Zuhaltekräfte.

Vorzugsweise ist die wirksame Länge der Laschen 10, 12 zwischen ihren Anlenkpunkten 9, 11;11,13 gleich groß.

In allen Zeichnungsfiguren sind gleiche Teile mit gleichen Bezugszahlen versehen.

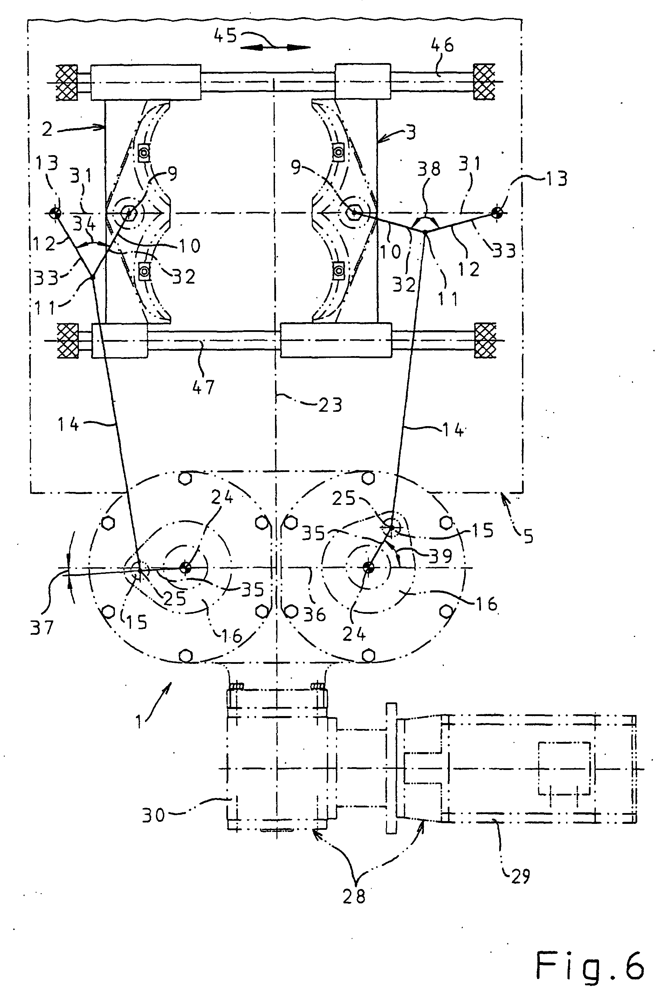

Bei dem Ausführungsbeispiel gemäß Fig. 6 dient die Vorrichtung 1 zum sogenannten parallelen Schließen und Öffnen der Halter 2, 3 in den Richtungen eines Doppelpfeils 45. Auf ihren Wegen von der geöffneten in die geschlossene Stellung und zurück werden die Halter 2, 3 in Fig. 6 durch Führungen 46 und 47 der Glasformmaschine 5 linear geführt.

In Fig. 6 treibt das Getriebe 30 das gleiche Schneckengetriebe 21, 19, 20 wie in den vorangegangenen Figuren an. Die Hebelgetriebe 16, 14, 12, 10 in Fig. 6 ähneln denen in den Fig. 1 bis 3.

In der auf der linken Seite der Fig. 6 dargestellten, voll geöffneten Stellung der Halter 2, 3 beträgt der Winkel 34 z.B. 60°. Dabei beträgt der Winkel 37 in Fig. 6 z.B. etwa 4°.

In der auf der rechten Seite der Fig. 6 gezeichneten, voll geschlossenen Stellung der Halter 2, 3 beträgt der Spitze Winkel 39 z.B. 60°. Gleichzeitig schließen die Längsachsen 32, 33 jeweils einen stumpfen Winkel 38 von z.B. 150° miteinander ein.

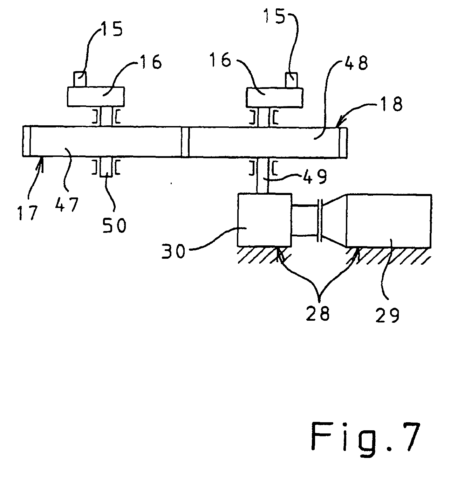

Bei dem Ausführungsbeispiel nach Fig. 7 sind das erste Zahnrad 17 und das zweite Zahnrad 18 als erstes Stirnrad 47 und zweites Stirnrad 48 ausgebildet, die miteinander im Eingriff stehen. Eine Welle 49 des zweiten Stirnrads 48 ist durch den Antrieb 28 hin und her drehend antreibbar. Der Antrieb 28 könnte alternativ auch eine Welle 50 des ersten Stirnrads 47 antreiben.

## Patentansprüche

1. Vorrichtung (1) zum hin und her gehenden Antrieb eines ersten (2) und eines zweiten Halters (3),
wobei jeder Halter (2;3) an einer Glasformmaschine (5) bewegbar gelagert ist,
wobei jeder Halter (2;3) wenigstens eine Formwerkzeughälfte (6;7) hält und jeweils eine erste Formwerkzeughälfte (6) des ersten Halters (2) mit einer zweiten Formwerkzeughälfte (7) des zweiten Halters (3) zur Bildung eines Formwerkzeugs (8) zur Herstellung eines Hohlglasgegenstands zusammenwirken,
wobei an einem ersten Anlenkpunkt (9) jedes Halters (2;3) eine erste Lasche (10) angelenkt ist,
wobei an einem im Abstand von dem ersten Anlenkpunkt (9) angeordneten zweiten Anlenkpunkt (11) der ersten Lasche (10) eine zweite Lasche (12) angelenkt ist,
wobei die zweite Lasche (12) an einem im Abstand von dem ersten Anlenkpunkt (9) und von dem zweiten Anlenkpunkt (11) angeordneten dritten Anlenkpunkt (13) der Glasformmaschine (5) angelenkt ist,
wobei an dem zweiten Anlenkpunkt (11) außerdem eine Stange (14) angelenkt ist,
und wobei jede Stange (14) im Abstand von ihrem zweiten Anlenkpunkt (11) an einem durch einen gemeinsamen Antrieb (28) hin und her bewegbaren Zapfen (15) angelenkt ist,
**dadurch gekennzeichnet, dass** jeder Zapfen (15) durch eine Kurbel (16) antreibbar ist,
daß die eine Kurbel (16) koaxial mit einem ersten Zahnrad (17) und die andere Kurbel (16) koaxial mit einem zweiten Zahnrad (18) verbunden ist,
und daß die Zahnräder (17,18) durch den Antrieb (28) gegensinnig hin und her drehend antreibbar sind.

2. Vorrichtung nach Anspruch 1,
**dadurch gekennzeichnet, daß** der erste Anlenkpunkt (9) in der Nähe der wenigstens einen Formwerkzeughälfte (6;7) angeordnet ist,
und daß der zweite Anlenkpunkt (11) in allen Betriebszuständen auf einer Seite einer Verbindungslinie (31) zwischen dem ersten (9) und dem dritten Anlenkpunkt (13) angeordnet ist, welche Seite der Kurbel (16) zugewandt ist.

3. Vorrichtung nach Anspruch 2,
**dadurch gekennzeichnet, daß** in einer voll geöffneten Stellung der Halter (2;3) Längsachsen (32;33) der ersten (10) und der zweiten Lasche (12) jeweils einen spitzen Winkel (34) miteinander einschließen.

4. Vorrichtung nach Anspruch 3,
**dadurch gekennzeichnet, daß** eine eine Längsachse (25) des Kurbelzapfens (15) mit einer Längsachse (24) der Kurbel (16) verbindende Verbindungsebene (35) in der voll geöffneten Stellung der Halter (2;3) jeweils auf einer ersten Seite einer durch die Längsachsen (24;24) der beiden Kurbeln (16;16) verlaufenden Querebene (36) der Vorrichtung (1) angeordnet ist, welche erste Seite von den Haltern (2;3) abgewandt ist.

5. Vorrichtung nach Anspruch 4,
**dadurch gekennzeichnet, daß** die Verbindungsebene (35) und die Querebene (36) einen spitzen Winkel (37) miteinander einschließen.

6. Vorrichtung nach einem der Ansprüche 1 bis 5,
**dadurch gekennzeichnet, daß** in einer voll geschlossenen Stellung der Halter (2;3) Längsachsen (32;33) der ersten (10) und zweiten Lasche (12) jeweils einen stumpfen Winkel (38) miteinander einschließen.

7. Vorrichtung nach Anspruch 6,
**dadurch gekennzeichnet, daß** eine eine Längsachse (25) des Kurbelzapfens (15) mit einer Längsachse (24) der Kurbel (16) verbindende Verbindungsebene (35) in der voll geschlossenen Stellung der Halter (2;3) jeweils auf einer zweiten Seite einer durch die Längsachsen (24;24) der beiden Kurbeln (16;16) verlaufenden Querebene (36) der Vorrichtung (1) angeordnet ist, welche zweite Seite den Haltern (2;3) zugewandt ist.

8. Vorrichtung nach Anspruch 7,
**dadurch gekennzeichnet, daß** die Verbindungsebene (35) und die Querebene (36) einen spitzen Winkel (39) miteinander einschließen.

9. Vorrichtung nach Anspruch 1,
**dadurch gekennzeichnet, daß** jeder Halter (2;3) um eine Schwenkachse (4) der Glasformmaschine (5) schwenkbar gelagert ist,
daß der erste Anlenkpunkt (9) jeweils an einem sich über die Schwenkachse (4) hinaus erstreckenden, rückwärtigen Fortsatz (40) des Halters (2;3) angeordnet ist,
und daß der zweite Anlenkpunkt (11) in allen Betriebszuständen auf einer Seite einer Verbindungslinie (31) zwischen dem ersten (9) und dem dritten Anlenkpunkt (13) angeordnet ist, welche Seite von der Kurbel (16) abgewandt ist.

10. Vorrichtung nach Anspruch 9,
**dadurch gekennzeichnet, daß** in einer voll geöffneten Stellung der Halter (2;3) Längsachsen (32;33) der ersten (10) und der zweiten Lasche (12) jeweils einen zumindest annähernd rechten Winkel (41) miteinander einschließen.

11. Vorrichtung nach Anspruch 10,
**dadurch gekennzeichnet, daß** eine durch eine Längsachse (25) des Kurbelzapfens (15) und eine Längsachse (24) der Kurbel (16) verlaufende Verbindungsebene (35) in der voll geöffneten Stellung der Halter (2;3) jeweils einen stumpfen Winkel (42) mit einer durch die Längsachsen (24;24) der beiden Kurbeln (16;16) verlaufenden Querebene (36) der Vorrichtung (1) einschließt.

12. Vorrichtung nach einem der Ansprüche 9 bis 11,
**dadurch gekennzeichnet, daß** in einer voll geschlossenen Stellung der Halter (2;3) Längsachsen (32;33) der ersten (10) und zweiten Lasche (12) jeweils einen stumpfen Winkel (43) miteinander einschließen.

13. Vorrichtung nach Anspruch 12,
**dadurch gekennzeichnet, daß** eine durch eine Längsachse (25) des Kurbelzapfens (15) und eine Längsachse (24) der Kurbel (16) verlaufende Verbindungsebene (35) in der voll geschlossenen Stellung der Halter (2;3) jeweils einen spitzen Winkel (44) mit einer durch die Längsachsen (24;24) der beiden Kurbeln (16;16) verlaufenden Querebene (36) der Vorrichtung (1) einschließt.

14. Vorrichtung nach einem der Ansprüche 1 bis 13,
**dadurch gekennzeichnet, daß** die wirksame Länge der Laschen (10;12) zwischen ihren Anlenkpunkten (9,11;11,13) gleich ist.

15. Vorrichtung nach einem der Ansprüche 1 bis 14,
**dadurch gekennzeichnet, daß** die Zahnräder (17;18) als ein erstes (19) und ein zweites Schneckenrad (20) ausgebildet sind,
und daß das erste (19) und das zweite Schneckenrad (20) im Eingriff mit einer gemeinsamen, durch den Antrieb (28) hin und her drehend antreibbaren Schnecke (21) stehen.

16. Vorrichtung nach Anspruch 15,
**dadurch gekennzeichnet, daß** die Schneckenräder (19;20) mit diametral gegenüberliegenden Seiten der Schnecke (21) im Eingriff stehen.

17. Vorrichtung nach Anspruch 15 oder 16,
**dadurch gekennzeichnet, daß** eine Längsachse (22) der Schnecke (21) in einer Längsebene (23) der Vorrichtung (1) angeordnet ist.

18. Vorrichtung nach einem der Ansprüche 1 bis 14,
**dadurch gekennzeichnet, daß** die Zahnräder (17;18) als miteinander im Eingriff stehende Stirnräder (47;48) ausgebildet sind,
und daß eine Welle (49) eines (48) der Stirnräder (47;48) durch den Antrieb (28) hin und her drehend antreibbar ist.

19. Vorrichtung nach einem der Ansprüche 1 bis 18,
**dadurch gekennzeichnet, daß** der Antrieb (28) einen Elektroservomotor (29) aufweist.

20. Vorrichtung nach Anspruch 19,
**dadurch gekennzeichnet, daß** der Antrieb (28) ein dem Elektroservomotor (29) nachgeschaltetes Getriebe (30) aufweist.

## Claims

1. Device (1) for driving a first (2) and a second holder (3) in a reciprocating manner,
wherein each holder (2; 3) is displaceably mounted on a glass forming machine (5),
wherein each holder (2; 3) holds at least one mould tool half (6; 7) and a first mould tool half (6) of the first holder (2) cooperates respectively with a second mould tool half (7) of the second holder (3) in order to form a mould tool (8) for production of a hollow glass object,
wherein a first joint bar (10) is articulated at a first articulation point (9) of each holder (2; 3),
wherein a second joint bar (12) is articulated at a second articulation point (11) of the first joint bar (10), disposed at a distance from the first articulation point (9),
wherein the second joint bar (12) is articulated at a third articulation point (13) ofthe glass forming machine (5), disposed at a distance from the first articulation point (9) and the second articulation point (11),
wherein a rod (14) is also articulated at the second articulation point (11),
and wherein each rod (14) is articulated at a distance from its second articulation point (11) at a pin (15) which can be moved in a reciprocating manner by a common drive (28),
**characterised in that** each pin (15) can be driven by a crank (16),
that one crank (16) is connected coaxially to a first toothed wheel (17) and the other crank (16) is connected coaxially to a second toothed wheel (18),
and that the toothed wheels (17, 18) can be rotationally driven in a reciprocating manner by the drive (28) in opposite directions.

2. Device according to claim 1,
**characterised in that** the first articulation point (9) is disposed in the proximity of the at least one mould tool half (6; 7),
and that the second articulation point (11) is disposed in all operating conditions on one side of a connecting line (31) between the first (9) and the third articulation point (13) which side faces the crank (16).

3. Device according to claim 2,
**characterised in that** in a fully opened position of the holders (2; 3) longitudinal axes (32; 33) of the first (10) and of the second joint bar (12) respectively form an acute angle (34) with each other.

4. Device according to claim 3,
**characterised in that** when the holders (2; 3) are in the fully opened position, a connecting plane (35) connecting a longitudinal axis (25) of the crank pin (15) to a longitudinal axis (24) of the crank (16) is disposed respectively on a first side of a transverse plane (36) of the device (1) extending through the longitudinal axes (24; 24) of the two cranks (16; 16), which first side faces away from the holders (2; 3).

5. Device according to claim 4,
**characterised in that** the connecting plane (35) and the transverse plane (36) form an acute angle (37) with each other.

6. Device according to any one of claims 1 to 5,
**characterised in that** in a fully closed position of the holders (2; 3), longitudinal axes (32, 33) of the first (10) and second joint bar (12) respectively form an obtuse angle (38) with each other.

7. Device according to claim 6,
**characterised in that** when the holders (2; 3) are in the fully closed position, a connecting plane (35) connecting a longitudinal axis (25) of the crank pin (15) to a longitudinal axis (24) of the crank (16) is disposed respectively on a second side of a transverse plane (36) of the device (1) extending through the longitudinal axes (24; 24) of the two cranks (16; 16), which second side faces the holders (2; 3).

8. Device according to claim 7,
**characterised in that** the connecting plane (35) and the transverse plane (36) form an acute angle (39) with each other.

9. Device according to claim 1,
**characterised in that** each holder (2; 3) is mounted so as to pivot about a pivot axis (4) of the glass forming machine (5),
that the first articulation point (9) is disposed respectively on a rearwards protrusion (40) on the holder (2; 3), extending beyond the pivot axis (4),
and that the second articulation point (11) is disposed in all operating conditions on one side of a connecting line (31) between the first (9) and the third articulation point (13), which side faces away from the crank (16).

10. Device according to claim 9,
**characterised in that** in a fully opened position of the holders (2; 3), longitudinal axes (32, 33) of the first (10) and second joint bar (12) respectively form an angle (41) with each other which is at least approximately a right angle.

11. Device according to claim 10,
**characterised in that** in the fully opened position of the holders (2; 3) a connecting plane (35) extending through a longitudinal axis (25) of the crank pin (15) and a longitudinal axis (24) of the crank (16) respectively forms an obtuse angle (42) with a transverse plane (36) of the device (1) extending through the longitudinal axes (24, 24) of the two cranks (16, 16).

12. Device according to any one of claims 9 to 11,
**characterised in that** in a fully closed position of the holders (2; 3), longitudinal axes (32; 33) of the first (10) and second joint bar (12) respectively form an obtuse angle (43) with each other.

13. Device according to claim 12,
**characterised in that** in the fully closed position of the holders (2; 3) a connecting plane (35) extending through a longitudinal axis (25) of the crank pin (15) and a longitudinal axis (24) of the crank (16) respectively forms an acute angle (44) with a transverse plane (36) of the device (1) extending through the longitudinal axes (24, 24) of the two cranks (16, 16).

14. Device according to any one of claims 1 to 13,
**characterised in that** the effective length of the joint bars (10, 12) between their articulation points (9, 11; 11,13) is the same.

15. Device according to any one of claims 1 to 14,
**characterised in that** the toothed wheels (17; 18) are formed as a first (19) and a second worm wheel (20),
and that the first (19) and the second worm wheel (20) are in engagement with a common worm (21) which can be rotationally driven in a reciprocating manner by the drive (28).

16. Device according to claim 15,
**characterised in that** the worm wheels (19; 20) are in engagement with diametrically opposite sides of the worm (21).

17. Device according to claim 15 or 16,
**characterised in that** a longitudinal axis (22) of the worm (21) is disposed in a longitudinal plane (23) of the device (1).

18. Device according to any one of claims 1 to 14,
**characterised in that** the toothed wheels (17; 18) are formed as mutually engaged spur wheels (47; 48),
and that a shaft (49) of one (48) of the spur wheels (47; 48) can be rotationally driven in a reciprocating manner by the drive (28).

19. Device according to any one of claims 1 to 18,
**characterised in that** the drive (28) comprises an electric servomotor (29).

20. Device according to claim 19,
**characterised in that** the drive (28) comprises a gear mechanism (30) connected downstream of the electric servomotor (29).

## Revendications

1. Dispositif (1) pour l'entraînement en va-et-vient d'un premier élément de maintien (2) et d'un second élément de maintien (3),
dans lequel chaque élément de maintien (2 ; 3) est supporté de manière mobile sur une machine à mouler le verre (5),
dans lequel chaque élément de maintien (2 ; 3) tient au moins une moitié d'outil de moulage (6 ; 7) et une première moitié d'outil de moulage (6) du premier élément de maintien (2) coopère avec une seconde moitié d'outil de moulage (7) du second élément de maintien (3) pour former un outil de moulage (8) pour la production d'un objet en verre creux,
dans lequel une première patte (10) est articulée sur un premier point d'articulation (9) de chaque élément de maintien (2 ; 3),
dans lequel une seconde patte (12) est articulée sur un second point d'articulation (11) de la première patte (10) disposé à distance du premier point d'articulation (9),
dans lequel la seconde patte (12) est articulée sur un troisième point d'articulation (13) de la machine à mouler le verre (5) disposé à distance du premier point d'articulation (9) et du second point d'articulation (11),
dans lequel une barre (14) est en outre articulée sur le second point d'articulation (11),
et dans lequel chaque barre (14) est articulée à distance de son second point d'articulation (11) sur un goujon (15) pouvant être déplacé en va-et-vient par un entraînement commun (28),
**caractérisé en ce que** chaque goujon (15) peut être entraîné par une manivelle (16),
**en ce qu'**une manivelle (16) est reliée de façon coaxiale avec une première roue dentée (17) et l'autre manivelle (16) est reliée de façon coaxiale à une seconde roue dentée (18),
et **en ce que** les roues dentées (17 ; 18) peuvent être entraînées par l'entraînement (28) en va-et-vient en sens inverse.

2. Dispositif selon la revendication 1, **caractérisé en ce que** le premier point d'articulation (9) est disposé à proximité de la moitié d'outil de moulage (6 ; 7) au nombre d'une au moins,
et **en ce que** le second point d'articulation (11) est disposé dans tous les états de fonctionnement d'un côté d'une ligne de liaison (31) entre le premier point d'articulation (9) et le troisième point d'articulation (13), lequel côté est orienté vers la manivelle (16).

3. Dispositif selon la revendication 2, **caractérisé en ce que** dans une position complètement ouverte des éléments de maintien (2 ; 3), des axes longitudinaux (32 ; 33) de la première patte (10) et de la deuxième patte (12) forment entre eux un angle aigu (34).

4. Dispositif selon la revendication 3, **caractérisé en ce qu'**un plan de liaison (35) reliant un axe longitudinal (25) du goujon à manivelle (15) avec un axe longitudinal (24) de la manivelle (16) est disposé, lorsque les éléments de maintien (2 ; 3) sont complètement ouverts, sur un premier côté d'un plan transversal (36) du dispositif (1) passant par les axes longitudinaux (24 ; 24) des deux manivelles (16; 16), lequel premier côté est dirigé à l'opposé des éléments de maintien (2 ; 3).

5. Dispositif selon la revendication 4, **caractérisé en ce que** le plan de liaison (35) et le plan transversal (36) forment ensemble un angle aigu (37).

6. Dispositif selon l'une ou l'ensemble des revendications 1 à 5, **caractérisé en ce que** lorsque les éléments de maintien (2 ; 3) sont complètement fermés, les axes longitudinaux (32 ; 33) de la première patte (10) et de la seconde patte (12) forment ensemble un angle obtus (38).

7. Dispositif selon la revendication 6, **caractérisé en ce qu'**un plan de liaison (35) reliant un axe longitudinal (25) du goujon à manivelle (15) avec un axe longitudinal (24) de la manivelle (16) est disposé, lorsque les éléments de maintien (2 ; 3) sont complètement fermés, sur un deuxième côté d'un plan transversal (36) du dispositif (1) passant par les axes longitudinaux (24 ; 24) des deux manivelles (16 ; 16), lequel deuxième côté est dirigé vers les éléments de maintien (2 ; 3).

8. Dispositif selon la revendication 7, **caractérisé en ce que** le plan de liaison (35) et le plan transversal (36) forment ensemble un angle aigu (39).

9. Dispositif selon la revendication 1, **caractérisé en ce que** chaque élément de maintien (2 ; 3) est supporté de manière pivotante autour d'un axe pivotant (4) de la machine à mouler le verre (5),
**en ce que** le premier point d'articulation (9) est disposé sur une saillie arrière (40) de chaque élément de maintien (2 ; 3) s'étendant au-delà de l'axe de pivotement (4),
et **en ce que** le second point d'articulation (11) est disposé dans tous les états de fonctionnement sur un côté d'une ligne de liaison (31) entre le premier point d'articulation (9) et le troisième point d'articulation (13), lequel côté est dirigé à l'opposé de la manivelle (16).

10. Dispositif selon la revendication 9, **caractérisé en ce que** lorsque les éléments de maintien (2 ; 3) sont complètement ouverts, des axes longitudinaux (32 ; 33) de la première patte (10) et de la seconde patte (12) se rejoignent en formant au moins approximativement un angle droit (41).

11. Dispositif selon la revendication 10, **caractérisé en ce qu'**un plan de liaison (35) reliant un axe longitudinal (25) du goujon à manivelle (15) avec un axe longitudinal (24) de la manivelle (16) forme, lorsque les éléments de maintien (2 ; 3) sont complètement ouverts, un angle obtus (42) avec un plan transversal (36) du dispositif (1) passant par l'axe longitudinal (24 ; 24) de chacune des deux manivelles (16 ; 16).

12. Dispositif selon l'une ou l'ensemble des revendications 9 à 11, **caractérisé en ce que** lorsque les éléments de maintien (2 ; 3) sont complètement fermées, les axes longitudinaux (32 ; 33) de la première patte (10) et de la seconde patte (12) forment ensemble un angle obtus (43).

13. Dispositif selon la revendication 12, **caractérisé en ce qu'**un plan de liaison (35) reliant un axe longitudinal (25) du goujon à manivelle (15) avec un axe longitudinal (24) de la manivelle (16) forme, lorsque les éléments de maintien (2 ; 3) sont complètement fermés, un angle aigu (44) avec un plan transversal (36) du dispositif (1) passant par l'axe longitudinal (24 ; 24) de chacune des deux manivelles (16 ; 16).

14. Dispositif selon l'une ou l'ensemble des revendications 1 à 13, **caractérisé en ce que** la longueur active des pattes (10 ; 12) entre leurs points d'articulation (9,11 ; 11,13) est égale.

15. Dispositif selon l'une ou l'ensemble des revendications 1 à 14, **caractérisé en ce que** les roues dentées (17 ; 18) sont conformées comme une première roue hélicoïdale (19) et une seconde roue hélicoïdale (20),
et **en ce que** la première roue hélicoïdale (19) et la seconde (20) sont en prise avec une vis sans fin (21) commune qui peut être entraînée en rotation en va-et-vient par l'entraînement (28).

16. Dispositif selon la revendication 15, **caractérisé en ce que** les roues hélicoïdales (19 ; 20) sont en prise avec des côtés diamétralement opposés de la vis sans fin (21).

17. Dispositif selon la revendication 15 ou 16, **caractérisé en ce qu'**un axe longitudinal (22) de la vis sans fin (21) est disposé dans un axe longitudinal (23) du dispositif (1).

18. Dispositif selon l'une ou l'ensemble des revendications 1 à 14, **caractérisé en ce que** les roues dentées (17 ; 18) sont formées comme des roues droites (47 ; 48) en prise l'une avec l'autre,
et **en ce qu'**un arbre (49) de l'une (48) des roues droites (47 ; 48) peut être entraîné en rotation en va-et-vient par l'entraînement (28).

19. Dispositif selon l'une ou l'ensemble des revendications 1 à 18, **caractérisé en ce que** l'entraînement (28) présente un servomoteur électrique (29).

20. Dispositif selon la revendication 19, **caractérisé en ce que** l'entraînement (28) présente un engrenage (30) monté après le servomoteur électrique (29).
